# EUROPÄISCHE PATENTSCHRIFT

(11) **EP 3 115 429 B1**
(45) Veröffentlichungstag und Bekanntmachung des Hinweises auf die Patenterteilung: **19.07.2017**
(21) Anmeldenummer: 16178539.9
(22) Anmeldetag: 08.07.2016
(51) Int. Cl.: C09J 103/02

(54) **NASSFESTER PAPIERSACK ODER NASSFESTE PAPPE MIT NASSFESTEN KLEBNÄHTEN**
MOISTURE-RESISTANT PAPER SACK OR MOISTURE-RESISTANT PAPER BOARD WITH MOISTURE-RESISTANT ADHESVIE SEAMS
SAC EN PAPIER OU PAPIER RESISTANT A L'HUMIDITE AVEC DES COUTURE ADHÉSIVES RESISTANT A L'HUMIDITE

(30) Priorität: 10.07.2015 DE 102015111244
(43) Veröffentlichungstag der Anmeldung: 11.01.2017
(73) Patentinhaber: Mondi AG, 1030 Wien (AT)
(72) Erfinder: Wichmann, Hans Joachim, 48324 Sendenhorst (DE)
(74) Vertreter: Lins, Edgar

(56) Entgegenhaltungen:
- DE-A1- 1 567 373
- DE-T2- 3 876 578
- GB-A- 1 239 636
- US-A- 2 463 148
- US-A- 3 024 212
- US-A- 3 336 246
- US-A- 3 984 275
- "Adhesives from Starch and Dextrin ED - Radley J A", 1. Januar 1976 (1976-01-01), INDUSTRIAL USES OF STARCH AND ITS DERIVATIVES, APPLIED SCIENCE PUBL, UK, PAGE(S) 1 - 50, XP009167849, ISBN: 0-85334-691-7 * Seite 33 - Seite 34 *

## Beschreibung

Die Erfindung betrifft einen nassfesten Papiersack oder nassfeste Pappe mit nassfesten Klebnähten aus einem Klebstoff auf der Basis von Stärke.

Für Papierprodukte, insbesondere Papiersäcke und Pappkartons aus Vollpappe oder aus Wellpappe, besteht das Problem, dass die durch das Papierprodukt gebildete Stabilität durch die grundsätzlich gegebene hohe Wasseraufnahmefähigkeit des Papiers oder der Pappe beeinträchtigt wird. Saugt sich das Papierprodukt mit Wasser voll, verliert es die im Trockenzustand bestehende Stabilität und neigt unter Belastung zur Rissbildung.

Die Herstellung von nassfestem Papier bzw. nassfester Pappe hat erhebliche Fortschritte gemacht. Ein Maß für die Wasseraufnahme ist der Cobb-Wert des Papiermaterials, der nach DIN EN 20535 das Wasseraufnahmevermögen über die Papieroberfläche in 60 Sekunden angibt. Inzwischen sind Papiersorten entwickelt worden, die einen Cobb₆₀-Wert von unter 25 g/m² oder sogar unter 20 g/m² aufweisen.

Aus Kraftpapier bestehende Papiersäcke werden an ihren Böden verklebt, um ein geschlossenes Behältnis auszubilden, das in einem der Böden ggf. eine Ventilöffnung aufweist. Die Verklebung von Papiersäcken erfolgt mit Klebern auf der Basis von Stärke, insbesondere extrudierbarer Mais- oder Kartoffelstärke. Diese Klebstoffe auf Wasserbasis stellen die erforderliche Klebverbindung mit den Papierlagen nur dann her, wenn eine ausreichende Benetzung des Papiers stattfindet. Für eine sichere Klebung werden Cobb-Werte von wenigstens 30 g/m² benötigt. Es ist daher nicht möglich, nassfestes Papier oder nassfeste Pappe mit einem herkömmlichen Stärkeklebstoff zu verkleben, weil die Verbindung zum Papiermaterial nicht ausreichend hergestellt wird. Darüber hinaus sind herkömmliche Stärkeklebstoffe selbst nicht nassfest, da sie sich zumindest unter Belastung bei längerer Wassereinwirkung lösen.

Wasserbeständige Dispersionsklebstoffe, die mit nassfestem Papier verklebbar wären und selbst hinreichend nassfest sind, stehen nicht zur Verfügung.

GB 1 239 636 A, US 3,336,246 A, US 3,024,212 , US 2,463,148, US 3,984,275, DE 38 76 578 T2 und DE 1 567 373 A1 offenbaren die Herstellung von wasserfestem Klebstoff auf Basis einer wässrigen Stärke, wobei der Klebstoff durch Zugabe eines starken alkalischen Mittels, wie insbesondere Natronlauge, basisch im Bereich zwischen pH 10,5 und 12 oder durch Zugabe von Säure sauer im pH-Bereich zwischen 3 und 7 eingestellt werden kann. Die Wasserfestigkeit des Klebstoffes ergibt sich aus der Zugabe eines geeigneten Harzes, das unter anderem Melamin-Formaldehyd-Harz und Harnstoff-Formaldehyd-Harz sein kann. Das Problem der fehlenden Benetzung eines Papiermaterials, das speziell für ein geringes Wasseraufnahmevermögen ausgerüstet ist, wird in den Druckschriften nicht angesprochen. Gleiches gilt für die Übersichtsdarstellung in der Monographie J. A. Radley "Industrial Uses of Starch and Its Derivatives, Essex 1976, in der sowohl die Behandlung mit Alkalien als auch mit Säuren für wasserfest ausgebildete Klebstoffe auf der Basis von Stärke beschrieben ist.

Der vorliegenden Erfindung liegt daher die Aufgabe zugrunde, einen Klebstoff zur Verfügung zu stellen, der selbst ausreichend nassfest ist und ausreichende Benetzungseigenschaften für die Verklebung von nassfestem Papiermaterial aufweist, sodass mit ihm ein nassfester Papiersack oder eine nassfeste Pappe mit nassfesten Klebnähten herstellbar sind.

Die Lösung dieser Aufgabe gelingt mit einem nassfesten Papiersack oder einer nassfesten Pappe, gebildet mit einem Papiermaterial mit einem Cobb₆₀-Wert von ≤ 25 g/m² Wasseraufnahmevermögen nach DIN EN 20535 und mit nassfesten Klebnähten hergestellt mit einem Klebstoff auf der Basis von Stärke, dem als Additive ein alkalisches Mittel zur Anhebung des pH-Werts des angesetzten Klebstoffs auf einen Wert zwischen 7,5 und 9,5, bevorzugt zwischen 8,0 und 9,0, und ein Melamin-Formaldehyd-Harz oder Harnstoff-Formaldehyd-Harz, dessen Feststoffanteil zwischen 8 und 12 Gew.% bezogen auf den Feststoffanteil der Stärke beträgt, als Additive zugegeben sind.

Eine übliche kaltquellende Extruderstärke auf Mais- oder Kartoffelbasis hat im Anlieferungszustand nach dem Auflösen einen pH-Wert von 5 bis 5,5. Der Erfindung liegt die Erkenntnis zugrunde, dass der pH-Wert auf eine Größenordnung zwischen 7,5 und 9,5 vorsichtig angehoben werden muss. Dabei ist zu beachten, dass eine Nachverkleisterung der immer noch vorhandenen Anteile an wenig aufgeschlossener (nativer) Stärke vermieden werden muss, weil sonst die Viskosität so stark ansteigt, dass eine übliche Verwendung des Klebstoffes in der Produktion nicht mehr möglich ist. Bekanntlich wird der Klebstoff beispielsweise in der Sackproduktion mit Klebstoffdüsen als Flüssigkeit aufgetragen, um die benötigte Produktionsgeschwindigkeit einhalten zu können. Eine Erhöhung der Viskosität bis zu einem Gelzustand ist daher nicht tolerierbar. Zu einer derartigen Erhöhung der Viskosität kommt es, wenn die Erhöhung des pH-Wertes mit zu starken alkalischen Mitteln erfolgt, wie dies beispielsweise durch die Verwendung von Natronlauge leicht geschieht. Bevorzugt ist daher die Anhebung des pH-Werts mit einem schwachen alkalischen Mittel, wie beispielsweise Soda (Natriumcarbonat). Es hat sich gezeigt, dass die Zugabe von etwa 1 Gew.% Soda bezogen auf das Gewicht des fertig angesetzten Stärkeklebstoffs (bei einem Feststoffanteil von ca. 17 %) die gewünschte Anhebung des pH-Werts auf bevorzugt 8,5 unproblematisch ermöglicht.

Der angehobene pH-Wert bewirkt beim Auftragen des Klebstoffs auf das hoch nassfeste Papier eine Quellung der Faser und somit die Möglichkeit einer Verankerung der Stärke in den Papierfasern. Der erhöhte pH-Wert sorgt durch die verbesserte Benetzbarkeit des Papiers auch für eine Reduzierung der Wirkung des Nassfestmittels, mit dem das Papiermaterial nassfest gemacht worden ist, also der Cobb₆₀-Wert abgesenkt worden ist.

Das zur Anhebung des pH-Werts verwendete alkalische Mittel überwindet das Problem der Benetzbarkeit der nassfest ausgebildeten Papierfasern. Bevorzugt ist die Verwendung eines schwachen alkalischen Mittels, wie beispielsweise Soda. In Frage kommen aber auch andere schwache alkalische Mittel, wie Natriumhydrogencarbonat, Kaliumcarbonat, Ammoniumcarbonat, Triethanolamin und Ammoniaklösung. Die Verwendung von starken Laugen, wie Natronlauge, ist nur bei einer sorgfältigen Zugabe und ständigen Kontrolle des pH-Werts möglich.

Um die Klebung selbst nassfest zu machen, wird dem Kleber erfindungsgemäß ein Melamin-Formaldehyd-Harz oder Harnstoff-Formaldehyd-Harz zugegeben. Der Feststoffgehalt des Harzes beträgt dabei zwischen 8 und 12 %, vorzugsweise zwischen 9,5 und 10,5 Gew.%, des Feststoffanteils der Stärke. Dem fertig angesetzten Stärkeklebstoff wird daher die Harzlösung mit ca. 30 % Feststoffgehalt durch Rühren zugegeben. Ein bevorzugtes Melamin-Formaldehyd-Harz ist Madurit 114 der Schweizer Firma INEOS. Madurit MW 114 hat einen Feststoffgehalt von 30 %.

Der Klebstoff ist an einem nassfesten Papiersack zur Verklebung der Kreuzböden verwendet worden. Der Papiersack besteht aus nassfestem Kraftpapier mit einem Cobb₆₀-Wert unter 20 g/m². Die Klebungen sind nach DIN 55445 Teil 1 (Prüfung von Nähten an Papiersäcken) unter Belastung im Wasserbad geprüft worden und haben sich länger als 8 Tage stabil erwiesen. Mit Zement gefüllte Mustersäcke (Füllgewicht 50 kg) wurden 1 Stunde lang mit 70 l/m² beregnet, ohne dass die Sackwandung durchweicht wurde oder die Klebenähte versagten.

Durch die Erfindung steht somit ein Stärkeklebstoff zur Verfügung, der auf nassfestem Papier mit voller Funktion verarbeitbar ist und der selbst nassfest ist und auch unter starker Wassereinwirkung funktionsfähig bleibt.

## Patentansprüche

1. Nassfester Papiersack oder nassfeste Pappe, gebildet mit einem Papiermaterial mit einem Cobb₆₀-Wert von ≤ 25 g/m² Wasseraufnahmevermögen nach DIN EN 20535 und mit nassfesten Klebnähten hergestellt mit einem Klebstoff auf der Basis von Stärke, dem als Additive ein alkalisches Mittel, mit dem der pH-Wert des angesetzten Klebstoffs auf einen Wert zwischen 7,5 und 9,5 angehoben ist, und ein Melamin-Formaldehyd-Harz oder Harnstoff-Formaldehyd-Harz, dessen Feststoffanteil zwischen 8 und 12 Gew.% bezogen auf den Feststoffanteil der Stärke beträgt, zugegeben sind.

2. Nassfester Papiersack oder nassfeste Pappe nach Anspruch 1, gebildet mit einem Papiermaterial mit einem Cobb₆₀-Wert ≤ 20 g/m² Wasseraufnahmevermögen nach DIN EN 20535.

3. Nassfester Papiersack oder nassfeste Pappe nach Anspruch 1 oder 2, **gekennzeichnet durch** einen Anteil von 0,5 bis 1,5 Gew.% Soda als alkalisches Mittel.

4. Nassfester Papiersack oder nassfeste Pappe nach Anspruch 1 oder 2, **gekennzeichnet durch** einen Anteil von 0,9 bis 1,1 Gew.% Soda als alkalisches Mittel.

5. Nassfester Papiersack oder nassfeste Pappe nach einem der Ansprüche 1 bis 4, **gekennzeichnet durch** ein Melamin-Formaldehyd-Harz oder Harnstoff-Formaldehyd-Harz, dessen Feststoffanteil zwischen 9,5 und 10,5 Gew.% bezogen auf den Feststoffanteil der Stärke beträgt.

6. Nassfester Papiersack oder nassfeste Pappe nach einem der Ansprüche 1 bis 5, **gekennzeichnet durch** ein Melamin-Formaldehyd-Harz als Additiv.

7. Nassfester Papiersack oder nassfeste Pappe nach einem der Ansprüche 1 bis 6, **gekennzeichnet durch** einen angehobenen pH-Wert des angesetzten Klebstoffs zwischen 8 und 9.

## Claims

1. Moisture-resistant paperbag or paperboard comprising a paper material having a Cobb₆₀ value of ≤ 25 g/m² water absorptiveness according to DIN EN 20535 and moisture-resistant gluelines comprising a starch-based adhesive comprising as additives an alkaline agent to raise the pH of the made-up adhesive to a value between 7.5 and 9.5 and a melamine-formaldehyde or urea-formaldehyde resin whose solids content is between 8 and 12 wt% based on the solids content of the starch.

2. Moisture-resistant paperbag or paperboard according to Claim 1, comprising a paper material having a Cobb₆₀ value of ≤ 20 g/m² water absorptiveness according to DIN EN 20535.

3. Moisture-resistant paperbag or paperboard according to Claim 1 or 2, **characterized by** a 0.5 to 1.5 wt% proportion of sodium carbonate as alkaline agent.

4. Moisture-resistant paperbag or paperboard according to Claim 1 or 2, **characterized by** a 0.9 to 1.1 wt% proportion of sodium carbonate as alkaline agent.

5. Moisture-resistant paperbag or paperboard according to any one of Claims 1 to 4, **characterized by** a melamine-formaldehyde or urea-formaldehyde resin whose solids content is between 9.5 and 10.5 wt% based on the solids content of the starch.

6. Moisture-resistant paperbag or paperboard according to any one of Claims 1 to 5, **characterized by** a melamine-formaldehyde resin as additive.

7. Moisture-resistant paperbag or paperboard according to any one of Claims 1 to 6, **characterized by** a raised pH for the made-up adhesive of between 8 and 9.

## Revendications

1. Sac en papier résistant à l'humidité ou carton résistant à l'humidité, formé avec un matériau à base de papier présentant un coefficient de Cobb60 ≤ 25 g/m2 concernant la capacité d'absorption d'eau selon la norme DIN EN 20535 et avec des cordons de soudure résistant à l'humidité réalisés avec une colle à base d'amidon, à laquelle sont ajoutés à titre d'additifs un agent alcalin, au moyen duquel la valeur du pH de la colle employée est augmentée jusqu'à une valeur entre 7,5 et 9,5, et une résine mélamine-formaldéhyde ou une résine urée-formaldéhyde, dont la part de matières solides est entre 8 et 12 % en poids, par référence à la part de matières solides de l'amidon.

2. Sac en papier résistant à l'humidité ou carton résistant à l'humidité selon la revendication 1, formé avec un matériau à base de papier présentant un coefficient de Cobb60 ≤ 20 g/m2 concernant la capacité d'absorption d'eau selon la norme DIN EN 20535.

3. Sac en papier résistant à l'humidité ou carton résistant à l'humidité selon la revendication 1 ou 2, **caractérisé par** une part de 0,5 à 1,5 % en poids de soude à titre d'agent alcalin.

4. Sac en papier résistant à l'humidité ou carton résistant à l'humidité selon la revendication 1 ou 2, **caractérisé par** une part de 0,9 à 1,1 % en poids de soude à titre d'agent alcalin.

5. Sac en papier résistant à l'humidité ou carton résistant à l'humidité selon l'une des revendications 1 à 4, **caractérisé par** une résine mélamine-formaldéhyde ou une résine urée-formaldéhyde dont la part de matières solides est entre 9,5 et 10,5 % en poids par référence à la part de matières solides de l'amidon.

6. Sac en papier résistant à l'humidité ou carton résistant à l'humidité selon l'une des revendications 1 à 5, **caractérisé par** une résine mélamine-formaldéhyde à titre d'additif.

7. Sac en papier résistant à l'humidité ou carton résistant à l'humidité selon l'une des revendications 1 à 6, **caractérisé en ce que** la valeur du pH de la colle employée est élevée à une valeur entre 8 et 9.
